# EUROPEAN PATENT APPLICATION

(11) **EP 3 950 186 A1**
(43) Date of publication of application: **09.02.2022**
(21) Application number: 20189182.7
(22) Date of filing: 03.08.2020
(51) Int. Cl.: B22F 10/66, B33Y 40/20, B22F 7/00, B29C 64/40, G06F 30/10

(54) **METHOD FOR DETACHING A 3D PRINTED PART, COMPUTER PROGRAM PRODUCT AND CAD/CAM DATA SET**

(71) Applicant: Siemens Aktiengesellschaft, 80333 München (DE)
(72) Inventor: Ceriani, Nicola Maria, 91056 Erlangen (DE)

(57) **Abstract**

The invention introduces a new type of structure especially for metal powder bed fusion 3D printed parts which can be broken using a freezing process by soaking the part with a liquid and freezing it.

## Description

Additive manufacturing (also referred to as 3D printing) may be performed through use of 3D printers that can construct objects on a layer-by-layer basis. Through improved additive manufacturing capabilities, manufacture of complex product designs has become increasingly possible, and part construction through additive manufacturing is becoming more and more prevalent. Some additive manufacturing techniques use application of a heat or energy source on powder beds to additively construct an object, for example via laser powder bed fusion (LPBF), selective laser melting (SLM), selective laser sintering (SLS), electron beam melting (EBM), and more. Others may use deposition-based technologies, such as through the layered deposition of beads of melted material (e. g., metal) that harden and form a 3D printed part.

In additive manufacturing, one of the challenges is the removal of the generated structures from the surfaces of the build plate as well as support structures from the surface of the generated part. Support structures may be constructed or otherwise used to assist in the manufacture of a 3D printed part, for example by supporting overhanging surfaces or other part portions that require physical reinforcement during manufacture.

However, such removal may be difficult. Many current removal processes are performed manually (e. g., with pliers, chisels, etc.) or with machining tools, such as through cutting, milling, drilling, or grinding operations that may require skilled operation of complex (and often costly) tools.

Today the detachment of parts from the build plate is performed using mainly three techniques:
- Structures can be cut at their conjunction with the build plate using a saw or band saw. This method is slow and not very accurate so an extra height of the structures must be planned in order to safely cut them without damaging the parts. This leads obviously to additional machining time.
- Electrical Discharge Machining EDM removes metal by generating an electrical arc between the point to be machined and a metal wire. This method is accurate but very time consuming and costly.
- Manual removal: when mechanically feasible, parts can be detached from the build plate with manual tools. This method entails health and safety risks for the operator and assigns costly human resources to a very low added value operation.

Furthermore, it has to be noted that the first two methods leave the complete support structures attached to the parts surface and thus require extensive machining for their removal.

In the disclosure of patent application PCT/US2019/048710 a system and method for automatic detachment of support structures for 3D Printed parts is described by inserting, into the digital design of a part designed for construction through an additive manufacturing process, a support structure configured to support construction of a surface of the part, wherein the support structure comprises:
a shape-memory element configured to be in a diminished shape during the additive manufacturing process and expand into an expanded shape after the addictive manufacturing process ends; and an element enclosure attached to the surface of the part and configured to hold the shape-memory element in the diminished shape and break from the part as the shape-memory element expands into the expanded shape.

Another method and device for detaching a 3D printed part, especially but not solely produced by Fused Layer Modelling / Manufacturing (FLM) or Fused Filament Fabrication (FFF) is claimed in the patent application PCT/EP2019/067681.

In order to free a 3D printed part from a build plate, the (support) structures must be cut or removed. The disclosure introduces a cable-based system which allows to easily detach the support structures from the build plate without having to cut, machine or manually remove them in other ways.

The system and method comprises as a novel part of the support structure, a guidetrack, preferably forming a channel, that allows properly placing a cable and guiding it during the detaching process.

An objective of the present invention is to facilitate a breaking of the connection between a part printed by means of a three-dimensional printing system and a building plate, the printed part is attached to.

The disclosure herein may provide a system, method, and logic for automatic detachment of 3D printed parts especially from a build plate.

### Description of Invention

The problem is solved by a method according to the features of claim 1.

Furthermore, the problem is solved by computer program product according to the features of claim 6. And the problem is solved by a CAD data set according to the features of claim 11.

The part that has been produced on a build plate by means of a three-dimensional printing method is characterized by the part comprising an extra layer between the build plate and the actual part that is intended to be printed, the extra layer having a porous structure comprising pores. In order to detach the part from the build plate, in a first step at least the extra layer is soaked in a liquid with the objective to fill at least a sufficient part of the pores with the liquid and then break up the layer by causing the liquid to expand and force the layer to break into two parts and detach the part from the build plate.

The invention solves the problem with a new type of support structures, namely a thin layer porous support structure that can be broken by filling them with a (water-based) solution such as water with an anti-corrosion agent and then by freezing such solution causing the breaking of the solution-filled pores, e. g. by using water to freeze to a temperature below 0° C.

As compared to the known state of the art technologies, the invention introduces the following advantages:
The detachment of additive manufactured parts from their support structures and the build plate can be performed without using machine tools or manual tools, greatly simplifying the detaching operations.

The quantity of residual support structures that remain on the surface of the printed parts after their detachment and that needs to be removed in the final finishing is reduced to a minimum.

As a consequence the process can be highly automated reducing the need for skilled labor.

Further advantageous embodiments of the invention are claimed in the dependent claims.

Features of examples of the present disclosure will become apparent by reference to the following detailed description of the drawings. For the sake of brevity, reference numerals or features having a previously described function may or may not be described in connection with other drawings in which they appear.
- Fig. 1: illustrates an exemplary 3D printed workpiece on a build plate;
- Fig. 2: illustrates the workpiece after detaching it from the build plate by the proposed method;
- Fig. 3: shows the steps of the proposed method.

### 3D printed porous structures

In additive manufacturing the geometries to be produced are usually digitally modeled and the instruction for the printing process are laid down in a CAD/CAM data set. Successively a manufacturing program is computed based on the model to obtain the desired geometry with the process of choice.

In the case of porous structures the geometry of pores is not modeled digitally but process parameters are developed that statistically create a certain type of pores. Porous structures can have different characteristics: in the considered case the pores must be big enough to allow their depowdering, i.e. removal of the unfused powder, so that water can enter inside of them and they must withstand the stress due to thermal deformation during the AM process but break upon freezing of water inside.

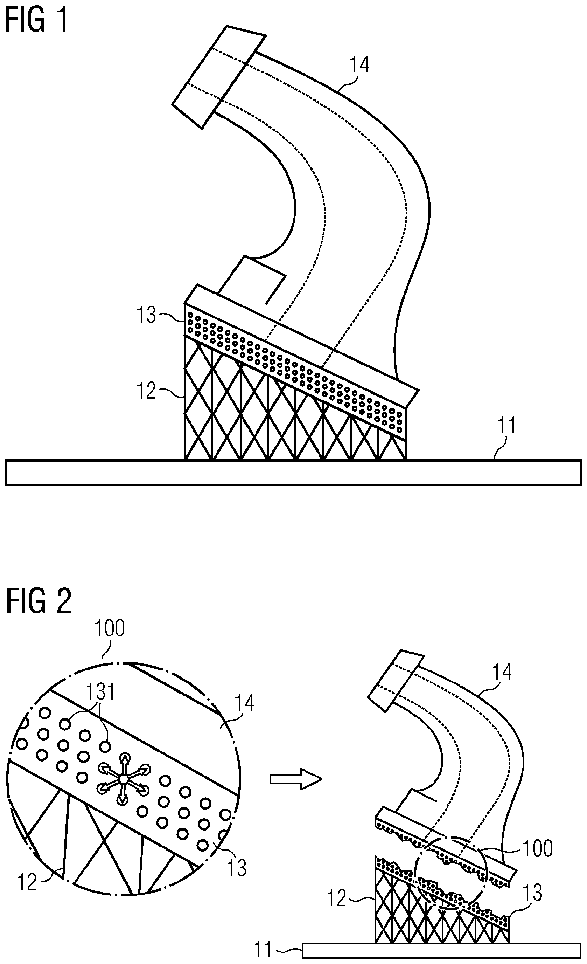

The design of the proposed new (support) structure goes as follows:
In order to allow the detachment of the part 14 from the build plate 11 or from an extra support structure 12 it is sufficient to use porous structures in a layer 13 adjacent to the 3D printed part 14, as shown in Figure 1. The remaining part of the support structure can be designed using state of the art techniques.

By placing the porous structures adjacent to the surface of the part the amount of support structures that remain attached to it after the detachment process is limited to a minimum and consequently the further post processing needed to completely remove supports is minimized.

Breaking off porous structures is also shown in greater detail in figure 2:
The newly introduced porous structures 13 containing a number of pores 131, can be broken by letting a liquid freeze inside of the pores 131. Although in the magnified section 100 the pores are depicted as little holes, this is only to symbolize the existence of pores, for filling them with a liquid with the objective to break off the part, those pores need to be interconnected with each other to ensure that the liquid will flood the whole structure. The expansion of the liquid during freezing generates pressure on the inner surface of the pores that contain water. If correctly sized, the structure of the pores is broken by freezing water, causing the detachment of the 3D printed part from the bulk of support structures. Figure 2 shows schematically the part after the breaking process.

### Process steps

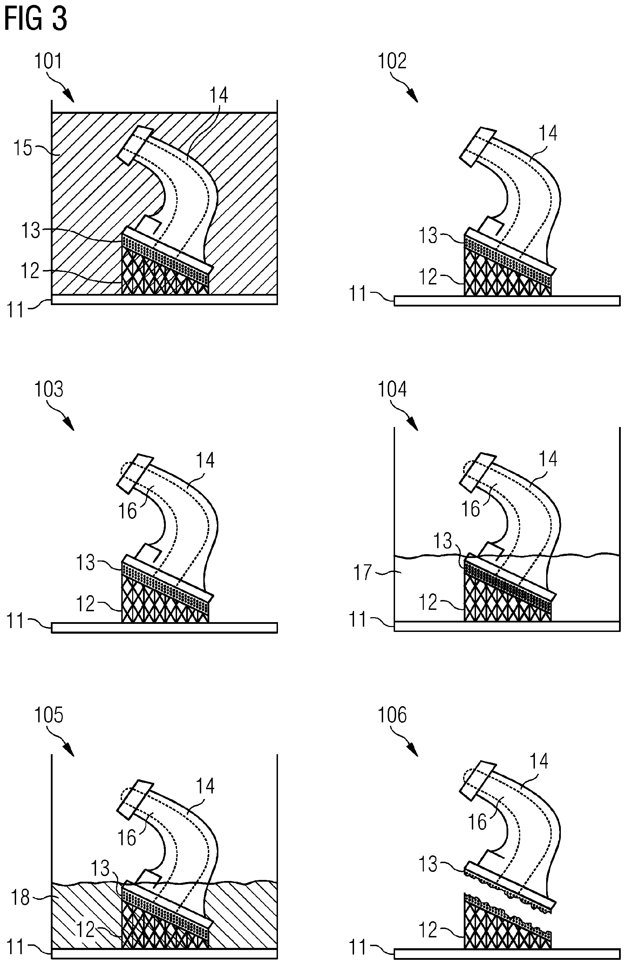

To better explain the invention the operating steps needed to break the (support) structure using the introduced new concept are shown in the following and depicted in Figure 3.

In a first step 101 the planned part 14 is 3D printed, using for example a Laser Powder Bed Fusion method. At the end of the additive manufacturing process the part 14 is located in the powder bed 15 and all of the cavities 16 of the part and of the support structures are filled with the printing powder.

In a second step 102 the 3D printed body is depowdered. This means that all the unfused powder is removed from the printing volume, including the powder in the pores of porous support structures.

Next, 103, all cavities 16 of the 3D printed part can be filled e. g. with a polymer foam, in order to prevent formation of ice inside of them in the next processing steps. By doing so, undesired damages to geometries that must be preserved, can be avoided.

The part is then, 104, submerged in a liquid 17, for example water or a water based solution, covering the whole support structures. Pure water can be used but also additives to protect metal from corrosion can be added.

The liquid then is frozen, 18, 105, breaking the porous support structures.

The frozen solution is melted and so freeing the parts from the build plate or support structures, in the last depicted step 106.

In the end, and not depicted in figure 3, the cavities 16 of the 3D printed part must be cleaned from the filling material, e.g. the used polymer foam.

While one example has been described in detail, it is to be understood that the disclosed example may be modified. Therefore, the foregoing description is to be considered nonlimiting.

## Claims

1. Method for detaching a part (14) that has been produced on a build plate (11) by means of a three-dimensional printing method,
**characterized in** the part (14) comprising an extra layer (13) between the build plate (11) and the part (14),
the extra layer (13) having a porous structure comprising pores (131) and
in a first step soaking at least the extra layer (13) in a liquid with the objective to fill at least a part of the pores (131) with the liquid (17) and
then break up the layer by causing the liquid (17) to expand and force the part (14) to detach from the build plate (11).

2. Method for detaching a part (14) according to claim 1,
**characterized in that**
the three-dimensional printing method is a Laser Powder Bed Fusion method.

3. Method for detaching a part (14) or support structure (12) according to claim 1 or 2,
the extra layer (13) is situated between the part (14) and a support structure (12) of the part (14).

4. Method for detaching a part (14) according to one of the previous claims,
**characterized in that**
the used liquid (17) is water or a water-based solution and the expanding of the liquid is caused by freezing the part to a temperature below 0 degree C.

5. Method for detaching a part (14) according to one of the previous claims,
**characterized in that**
the part (14) has at least one cavity (16) and the at least one cavity (16) must be filled with a filling material to prevent the cavity (16) from being filled with the liquid (17) before soaking the extra layer (13).

6. Computer program product for designing the production process for a detachable a part (14) that is produced on a build plate (11) by means of a three-dimensional printing method,
**characterized in that**
the design of the part (14) comprises an extra layer (13) situated as a basis of the part (14) on the build plate (11),
the extra layer (13) having a porous structure comprising pores (131) and after printing the part (14) with the extra layer (13) for soaking at least the extra layer (13) in a liquid with the objective to fill at least a part of the pores (131) with the liquid (17) and
then break up the layer by causing the liquid (17) to expand and force the part (14) to detach from the build plate (11).

7. Computer program product according to claim 6,
**characterized in that**
the three-dimensional printing method is a Laser Powder Bed Fusion method.

8. Computer program product according to claim 6 or 7,
**characterized in that**,
the extra layer (13) is situated between the part (14) and a support structure (12) for the part (14).

9. Computer program product according to one of the claims 6 to 8,
**characterized in that**
the used liquid (17) is water or a water-based solution and the expanding of the liquid is caused by freezing the part to a temperature below 0 degree C.

10. Computer program product according to one of the claims 6 to 9,
**characterized in that**
the porous structure is designed by using process parameters that statistically create pores (131) that are big enough to allow depowdering after printing.

11. CAD/CAM data set for a part (14) that has been produced on a build plate (11) by means of a three-dimensional printing method,
**characterized in** the part (14) comprising an extra layer (13) between the build plate (11) and the part (14),
the extra layer (13) having a porous structure comprising pores (131) and
in a first step soaking at least the extra layer (13) in a liquid with the objective to fill at least a part of the pores (131) with the liquid (17) and
then break up the layer by causing the liquid (17) to expand and force the part (14) to detach from the build plate (11).

12. CAD data set according to claim 11,
**characterized in that**
the three-dimensional printing method is a Laser Powder Bed Fusion method.

13. CAD data set according to claim 11 or 12,
**characterized in that**,
the extra layer (13) is situated between the part (14) and a support structure (12) for the part (14).

14. CAD data set according to one of the claims 11 to 13,
**characterized in that**
the used liquid (17) is water or a water-based solution and the expanding of the liquid is caused by freezing the part to a temperature below 0° C.

15. CAD data set according to one of the claims 11 to 14,
**characterized in that**
the porous structure is designed by using process parameters that statistically create pores (131) that are big enough to allow depowdering after printing.
